# EUROPÄISCHE PATENTSCHRIFT

(11) **EP 4 300 267 B1**
(45) Veröffentlichungstag und Bekanntmachung des Hinweises auf die Patenterteilung: **28.05.2025**
(21) Anmeldenummer: 23170611.0
(22) Anmeldetag: 28.04.2023
(51) Int. Cl.: G06F 3/01, G06F 3/0354

(54) **EINGABEGERÄT MIT VERBESSERTEN FEDERELEMENTEN ZUR BEWEGLICHEN LAGERUNG DES BEDIENTEILS, ZUGEHÖRIGES FEDERELEMENT SOWIE MONTAGEVERFAHREN**
INPUT DEVICE WITH IMPROVED SPRING ELEMENTS FOR MOVABLY MOUNTING THE CONTROL PART, ASSOCIATED SPRING ELEMENT AND MOUNTING METHOD
DISPOSITIF D'ENTRÉE AVEC DES ÉLÉMENTS DE RESSORT AMÉLIORÉS POUR LE MONTAGE MOBILE DE LA PARTIE DE COMMANDE, ÉLÉMENT DE RESSORT CORRESPONDANT AINSI QUE PROCÉDÉ DE MONTAGE

(30) Priorität: 29.06.2022 DE 102022116244
(43) Veröffentlichungstag der Anmeldung: 03.01.2024
(73) Patentinhaber: Preh GmbH, 97616 Bad Neustadt a.d. Saale (DE)
(72) Erfinder: MILLER, Michael, 97616 Bad Neustadt (DE); SCHULTHEIS, Thilo, 97616 Bad Neustadt a. d. Saale (DE); BODENSTEIN, Tobias, 97616 Salz (DE); SCHWAB, Michael, 97657 Sandberg (DE)
(74) Vertreter: Lohmanns, Bernard

(56) Entgegenhaltungen:
- EP-A2- 3 499 343
- WO-A1-2014/096565
- JP-B2- 6 591 617
- US-A- 4 684 203
- US-A1- 2018 260 027
- US-A1- 2020 083 790

## Beschreibung

Die Erfindung betrifft ein Eingabegerät mit einem Bedienteil, welches beispielsweise eine berührungssensitive Eingabefläche aufweist, wobei das Bedienteil beweglich gegenüber einem Träger und elastisch rückstellend in eine Ruhelage gelagert ist, um mittels eines Aktors in Schwingungen oder zumindest eine Bewegung versetzt werden zu können. Die Schwingung bzw. Bewegung ist für den Bediener bei Berührung fühlbar und dient somit der Erzeugung eines haptischen Feedbacks bei der Eingabe. Eine solche Vorgehensweise ist aus dem Stand der Technik bekannt. Für diese Schwingung werden im Stand der Technik beispielsweise der US 2008055277 A1 unterschiedliche Schwingungsrichtungen vorgeschlagen. Auch betreffend den Aktor, bevorzugt den elektrisch betätigten Aktor, sind unterschiedlichen Konzepte bekannt, beispielsweise solche mit elektromagnetischem, piezoelektrischem, kapazitivem oder elektrostatischem Antrieb zur Bewegungs- bzw. Schwingungsanregung. Die vorliegende Erfindung beschäftigt sich mit dem Problem der "schwimmenden" und rückstellenden Lagerung des Bedienteils. Hier kommt es auf eine möglichst reibungsfreie, verschleißarme und Vandalismus resistente Lagerung an, damit die Ruhestellung des Bedienteils zuverlässig beibehalten wird. Insbesondere im Kraftfahrzeug kommt es ferner darauf an, Bauraum und Gewicht zu sparen. Darüber hinaus ist das Erreichen einer vorbestimmten und spannungsfreien Einbaulage entscheidend dafür, dass sich das haptische Feedback wie vorgegeben und reproduzierbar einstellt. Hohe Anforderungen an die Lagerung ergeben sich, wenn sich die Richtung der durch den Aktor bewirkten Bewegungs- oder Schwingungsanregung nicht mit der Richtung der bei Berührung aufgebrachten Betätigungskraft deckt, insbesondere beide Richtungen orthogonal zueinander stehen. Kleinste Deformationen der die schwingende Lagerung und die Rückstellung bestimmenden Federelemente stören das haptische Feedback entscheidend und verhindern, dass sich das haptische Feedback wie vorgesehen einstellt. Solche Deformationen können beispielsweise durch eine falsche Handhabung beim Montageprozess bewirkt werden.

Somit besteht Bedarf nach einer solchen Lagerung des Bedienteils, bei dem eine rückstellende Lageveränderung in der zur berührempfindlichen Eingabefläche des Bedienteils parallelen Richtung sich nach der Montage zuverlässig und vor allem reproduzierbar einstellt und beibehalten wird, um auf aufwendige Justierarbeiten verzichten zu können. Darüber hinaus muss die Rückstellungswirkung dauerhaft und dabei gleichbleibend sein, um nicht die Schwingungsanregung durch den Aktor im Betrieb nachjustieren zu müssen.

Ein Eingabegerät gemäß dem Oberbegriff der unabhängigen Ansprüche ist aus der EP 3 499 343 A2 bekannt. Konstruktive Merkmale gattungsgemäßer Eingabegeräte sind aus der US 2020/083790 A1, JP 6 591617 B2, WO 2014/096565 A1 und der US 2018/260027 A1 bekannt.

Vor diesem Hintergrund ist es die Aufgabe der vorliegenden Erfindung, dass ein hinsichtlich der Lagerung verbessertes Eingabegerät bereitgestellt wird, insbesondere dessen Montage- und Justieraufwand minimiert ist. Diese Aufgabe wird durch ein Eingabegerät des Anspruchs 1 gelöst. Ein entsprechend vorteilhaftes Montageverfahren ist Gegenstand des nebengeordneten Anspruchs. Vorteilhafte Ausgestaltungen sind Gegenstand der jeweils abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Eingabegerät. Das erfindungsgemäße Eingabegerät weist ein Bedienteil, insbesondere ein Touchpad oder einen Touchscreen auf. Das Bedienteil weist eine Eingabefläche, insbesondere eine berührempfindliche Eingabefläche, auf. Der Begriff "Touchpad" im Sinne der Erfindung ist weit auszulegen und betrifft jegliches berührempfindliches Eingabegerät, bei dem ortsauflösend, aber unabhängig vom Grad der Ortsauflösung eine Berührung einer Eingabefläche detektiert wird. Bevorzugt ist ein Touchpad vorgesehen, um beispielsweise entsprechend einem Berührungsverlauf eine Eingabe, beispielsweise die Steuerung eines Cursors auf einem Display, zu bewirken.

Erfindungsgemäß kann das Touchpad Teil einer Kombination aus Anzeige- und berührempfindlicher Eingabefläche ("touchscreen") sein oder eine displaylose, also rein berührempfindliche Eingabefläche definieren. Die Berührkoordinaten bzw. deren Verläufe werden beispielsweise kapazitiv, resistiv oder optisch ermittelt.

Das erfindungsgemäße Eingabegerät weist ferner einen Träger auf, an dem das Bedienteil, bzw. Touchpad, beweglich gelagert ist. Das erfindungsgemäße Eingabegerät umfasst ferner Mittel zur rückstellenden Lagerung des Bedienteils an dem Träger, die ausgebildet sind, das Bedienteil in einer zur Eingabefläche im Wesentlichen parallelen Auslenkrichtung aus einer Ruhestellung auslenkbar und in die Ruhestellung elastisch rückstellend zu lagern. Anders ausgedrückt, es ist eine Bewegung des Bedienteils aus oder bevorzugt um die Ruhestellung ermöglicht.

Erfindungsgemäß ist ferner ein Aktor zur Bewegungsanregung des Bedienteils in Auslenkrichtung und damit zur Erzeugung einer haptischen Rückmeldung in die besagte Auslenkrichtung vorgesehen. Bevorzugt handelt es sich um einen elektrisch betätigten Aktor, beispielsweise einen solchen mit elektromagnetischem, piezoelektrischem, kapazitivem oder elektrostatischem Antrieb zur Bewegungs- bzw. Schwingungsanregung. Beispielsweise ist ein elektromagnetischer Aktor vorgesehen, der einen Anker und eine mit dem Anker elektromagnetisch zusammenwirkende, elektrische Spule umfasst. Bevorzugt ist der Aktor ausschließlich am Betätigungsteil befestigt

Zur Detektion einer auf die Eingabefläche wirkenden Betätigungskraft ist gemäß einer Ausgestaltung ein Kraftsensor, beispielsweise ein piezoelektrischer, kapazitiver, induktiver Kraftsensor, bevorzugt ein optischer Kraftsensor, vorgesehen. Beispielsweise wird bei Überschreiten einer vorgegebenen Betätigungskraft ein haptisches, durch den Aktor erzeugtes Feedback ausgelöst. Beispielsweise ist der Kraftsensor zwischen dem Träger und dem Bedienteil oder zwischen dem Träger und einem Gehäuse, an dem der Träger elastisch nachgebend oder beweglich gelagert ist, angeordnet.

Erfindungsgemäß umfassen die Mittel zur rückstellenden Lagerung des Bedienteils zwei, sich im Wesentlichen parallel zueinander und im Wesentlichen parallel zur Eingabefläche erstreckende Federelemente, die jeweils mindestens einen Blattfederstreifen aus Federstahl und mindestens drei, längs des Blattfederstreifens verteilt angeordnete Befestigungselemente aufweisen, in denen der Blattfederstreifen formschlüssig aufgenommen ist. Dabei sind die beiden äußeren Befestigungselemente zu dem einen nächstbenachbarten inneren Befestigungselement gleich beabstandet angeordnet, so dass zwischen den äußeren Befestigungselementen und dem nächstbenachbarten inneren Befestigungselement desselben Federelements in einer zur Eingabefläche im Wesentlichen parallelen Ebene schwingfähige Blattfederstreifenabschnitte von im Wesentlichen gleicher Länge verbleiben. Bevorzugt ist der Blattfederstreifen hochkant zwischen dem Bedienteil und dem Träger angeordnet, d.h. die Hauptfläche der Blattfederstreifen ist im Wesentlichen orthogonal zur Eingabefläche angeordnet.

Erfindungsgemäß bilden die äußeren Befestigungselemente eines ersten Federelements der zwei Federelemente und ein inneres Befestigungselement eines verbleibenden zweiten Federelements der zwei Federelemente die bedienteilseitigen Befestigungselemente, womit ausgedrückt sein soll, dass diese jeweils am Bedienteil festgelegt sind. Erfindungsgemäß bilden die äußeren Befestigungselemente des zweiten Federelements und ein inneres Befestigungselement des ersten Federelements die trägerseitigen Befestigungselemente aus und sind somit jeweils am Träger festgelegt. Die Befestigungselemente sind beispielsweise kraft-, stoff- und/oder formschlüssig am Bedienteil bzw. am Träger festgelegt.

Bevorzugt sind alle Befestigungselemente aus einem Thermoplast ausgebildet, bevorzugter ist mindestens eines der Befestigungselemente zumindest teilweise aus einem thermoplastischen Elastomer ausgebildet. Letzteres bewirkt, dass der ansonsten in Betätigungsrichtung starre Aufbau des Bedienteils unter Bedienkrafteinwirkung definiert nachgibt und somit eine Betätigungskraftmessung durch den oben beschriebenen Kraftsensor ermöglicht.

Die Blattfederstreifen sind beispielsweise in einem Stanzschritt hergestellt und bevorzugt identisch ausgebildet. Der jeweils zwischen dem äußeren Befestigungselement und dem nächstbenachbart inneren Befestigungselement verbleibende und bevorzugt frei zugängliche Blattfederstreifenabschnitt ist elastisch schwingungsfähig und fungiert als "Biegebalken" . Ein Durchbruch im Blattfederstreifenabschnitt kann zur Anpassung der elastischen Nachgiebigkeit vorgesehen sein. Die Hauptflächen der Blattfederabschnitte sind im Wesentlichen senkrecht zur Eingabefläche orientiert und sie weisen in der zur Eingabefläche senkrechten, der Auslenkrichtung entsprechenden Richtung die höchste Nachgiebigkeit auf, während sie im Vergleich dazu eine hohe Steifigkeit bei Druck- und Zugbeanspruchung in Längsrichtung und in der zur Eingabefläche senkrechten Richtung aufweisen.

Das erfindungsgemäß ausgebildete Eingabegerät spart durch die Ausgestaltung der Lagerungsmittel Bauraum und Gewicht. Zudem ist die Gefahr einer Beschädigung oder Deformation der Federelemente nahezu ausgeschlossen. Das Rückstellverhalten stellt sich auch ohne Justieraufwand reproduzierbar ein. Die erfindungsgemäß vorgesehene Dreipunktlagerung sowohl durch die trägerseitigen Befestigungselemente zum Träger hin als auch durch die bedienteilseitigen Befestigungselemente zum Bedienteil hin wird ein reproduzierbares und wohl definiertes Bewegungs- bzw. Schwingungsverhalten des Bedienteils vorgegeben.

Bevorzugt sind wenigstens die bedienteilseitigen Befestigungselemente mit dem Bedienteil stoffschlüssig verbunden, bevorzugt verschweißt. Beispielsweise weist wenigstens ein Befestigungselement und/oder die zugehörige Anlagefläche vor der Herstellung der Befestigung am Träger bzw. Bedienteil einen oder mehrere Energierichtungsgeber, wie eine keilförmige Erhebung, auf, um mit dem Träger bzw. Bedienteil durch Ultraschallverschweißen stoffschlüssig verbunden zu werden. Zusätzlich können Mittel zur klemmenden Befestigung des Befestigungselements am Träger bzw. Bedienteil vorgesehen sein.

Bevorzugt sind wenigstens die trägerseitigen Befestigungselemente ausgebildet, mit dem Träger eine Rastverbindung herzustellen, um die Montage zu vereinfachen.

Bevorzugt sind die trägerseitigen Befestigungselemente jeweils mit einer Montagehilfe versehen, wobei bevorzugter die Montagehilfe jeweils den Träger auf seiner dem Bedienteil abgewandten Seite überragt, beispielsweise zumindest zu Beginn des Montageprozesses. Beispielsweise ist die Montagehilfe als eine vorstehende Greifhilfe zur händischen oder maschinellen Montage ausgebildet. Beispielsweise bildet das betroffene Befestigungselement einen orthogonal sich weg vom Blattfederstreifen erstreckenden Stab als Montagehilfe aus. Beispielsweise ist die Montaghilfe vorgesehen, das Befestigungselement in Anschlag mit dem Träger zu halten und/oder das Befestigungselement mit dem Träger zu verrasten. Bevorzugt sind die Montagehilfe und der verbleibende Rest des Befestigungselements einstückig ausgebildet.

Gemäß einer bevorzugten Ausgestaltung ist jeweils eine Sollbruchstelle zur Trennung der Montagehilfe von einem am Eingabegerät verbleibenden Rest des trägerseitigen Befestigungselements vorgesehen. Beispielsweise ist die Sollbruchstelle am Übergang zwischen der stabförmigen Montagehilfe und dem verbleibenden Rest des Befestigungselements vorgesehen und als Schwächung der Materialstärke, insbesondere als Verjüngung ausgebildet.

Bevorzugt sind die trägerseitigen Befestigungselemente in einer ersten Ebene angeordnet und die bedienteilseitigen Befestigungselemente in einer zweiten, zur ersten Ebene parallelen Ebene oder alle in einer gemeinsamen Ebene angeordnet.

Bevorzugt werden die Befestigungselemente durch Umspritzen des Blattfederstreifens am Blattfederstreifen festgelegt.

Die Erfindung betrifft ferner ein Verfahren zur Herstellung eines Eingabegeräts mit den folgenden Schritten. In einem Bereitstellungsschritt erfolgt ein Bereitstellen eines Bedienteils mit einer Eingabefläche. In einem weiteren Bereitstellungsschritt erfolgt ein Bereitstellen eines Trägers. Ferner ist ein Bereitstellen von Mitteln zur rückstellenden Lagerung des Bedienteils an dem Träger vorgesehen, wobei die Mittel ausgebildet sind, das Bedienteil in einer zur Eingabefläche im Wesentlichen parallelen Auslenkrichtung, aus einer Ruhestellung auslenkbar und elastisch rückstellend zu lagern. Diese Mittel zur rückstellenden Lagerung des Bedienteils weisen zwei Federelemente auf, die jeweils einen Blattfederstreifen aus Federstahl und zwei äußere Befestigungselemente und mindestens ein inneres Befestigungselement aufweisen, in denen der Blattfederstreifen formschlüssig aufgenommen ist und die längs des Blattfederstreifens verteilt angeordnet sind, wobei die äußeren Befestigungselemente von einem nächstbenachbarten inneren Befestigungselement gleichmäßig beabstandet sind. Die Federelemente werden beispielsweise in einem zeitlich vorgeordneten thermisch formgebenden Verfahrensschritt durch Umspritzen mit einem Thermoplast hergestellt. Bevorzugt ist wenigstens ein Befestigungselement ganz oder zumindest teilweise aus einem thermoplastischen Elastomer ausgebildet.

In einem Befestigungsschritt erfolgt ein Befestigen eines Aktors zur Bewegungsanregung des Bedienteils in Auslenkrichtung an dem Träger und/oder dem Bedienteil, um mittels des Aktors eine haptische Rückmeldung für einen Bediener zu erzeugen. Bevorzugt erfolgt die Befestigung des Aktors ausschließlich am Bedienteil.

In einem weiteren Befestigungsschritt, der der Befestigung des Aktors zeitlich vor- oder nachgeordnet sein kann, erfolgt ein Befestigen der äußeren Befestigungselemente eines ersten Federelements der zwei Federelemente und eines mittleren Befestigungselements eines verbleibenden zweiten Federelements der zwei Federelemente jeweils am Bedienteil, wobei diese die bedienteilseitigen Befestigungselemente bilden.

In einem noch weiteren Befestigungsschritt, der den vorgenannten Befestigungsschritten vor-, zwischen- oder nachgeschaltet sein kann, erfolgt ein Befestigen der äußeren Befestigungselemente des zweiten Federelements und eines inneren Befestigungselements des ersten Federelements jeweils am Träger, wobei diese die bedienteilseitigen Befestigungselemente bilden, so dass zwischen den äußeren Befestigungselementen und den dazu nächstbenachbarten inneren Befestigungselementen desselben Federelements in einer gemeinsamen, zur Eingabefläche im Wesentlichen parallelen Ebene schwingfähige Blattfederstreifenabschnitt von im Wesentlichen gleicher Länge verbleiben.

Bevorzugt werden die bedienteilseitigen Befestigungselemente durch Ultraschallverschweißen am Bedienteil festgelegt. Gemäß einer bevorzugten Ausgestaltung weist wenigstens ein bereitgestelltes Befestigungselement und/oder die zugehörige Anlagefläche am bereitgestellten Träger bzw. bereitgestellten Bedienteil einen Energierichtungsgeber, wie eine keilförmige Erhebung, auf, um mit dem Bedienteil durch Ultraschallverschweißen stoffschlüssig verbunden zu werden.

Bevorzugt werden die trägerseitigen Befestigungselemente durch Herstellen einer kraft- und/oder formschlüssigen Verbindung am Träger festgelegt, wobei dieser Befestigungsschritt der Befestigung der bedienteilseitigen Befestigungselemente nachgeschaltet ist. Beispielsweise wird das Befestigungselement in Anlage mit dem Träger gebracht und erst durch Verstellen einer Halteeinrichtung form- und/oder kraftschlüssig befestigt, um Beschädigungen durch Überbelastung des Federelements zu vermeiden.

Bevorzugt weisen die trägerseitigen Befestigungselemente jeweils eine Montagehilfe auf, wobei das Befestigen der trägerseitigen Befestigungselemente mittels oder unter Verwendung der jeweils vorgesehenen Montagehilfe erfolgt, wobei bevorzugter die Montagehilfe jeweils den Träger auf seiner dem Bedienteil abgewandten Seite überragt.

Bevorzugt werden die Montagehilfen nach dem Befestigen der trägerseitigen Befestigungselemente an einer Sollbruchstelle von dem am Eingabegerät verbleibenden Rest des trägerseitigen Befestigungselements abgetrennt.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Figur 1: eine schematische Schnittansicht durch eine Ausführungsform des erfindungsgemäßen Eingabegeräts 1;
- Figur 2: eine perspektivische Ansicht eines ersten, zum Eingabegerät 1 gehörigen Federelements 4a;
- Figur 3: eine perspektivische Ansicht eines zweiten, zum Eingabegerät 1 gehörigen Federelements 4a;
- Figur 4: eine perspektivische Rückansicht des Trägers 2 aus Figur 1;
- Figur 5: eine perspektivische Rückansicht des Bedienteils 2 aus Figur 1.

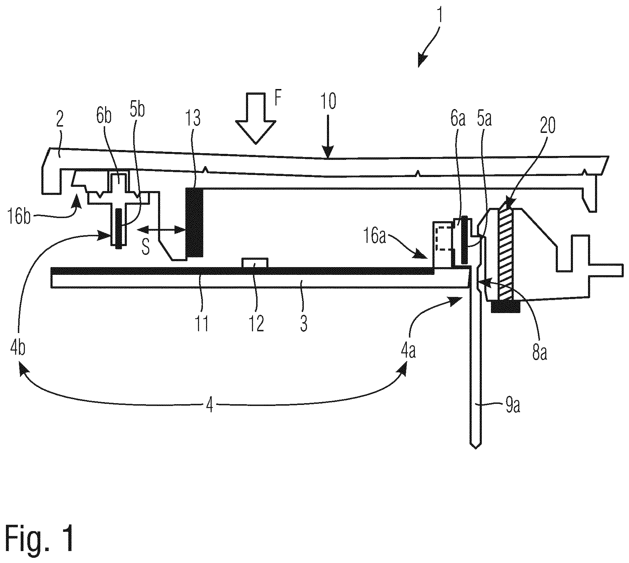

Figur 1 zeigt eine Ausführungsform des erfindungsgemäßen Eingabegeräts 1. Das erfindungsgemäße Eingabegerät weist ein Bedienteil 2, beispielsweise ein Touchpad oder einen Touchscreen auf. Das Bedienteil 2 weist eine Eingabefläche 10, insbesondere eine berührempfindliche Eingabefläche, auf.

Das erfindungsgemäße Eingabegerät 1 weist ferner einen Träger 3 auf, an dem das Bedienteil 2 beweglich gelagert ist. Das erfindungsgemäße Eingabegerät 1 umfasst ferner Mittel 4 zur rückstellenden Lagerung des Bedienteils 2 an dem Träger 3, die ausgebildet sind, das Bedienteil 2 in einer zur Eingabefläche im Wesentlichen parallelen Auslenkrichtung S aus einer Ruhestellung auslenkbar und in die Ruhestellung elastisch rückstellend zu lagern. Anders ausgedrückt, es ist eine Bewegung des Bedienteils 2 aus oder bevorzugt um die Ruhestellung ermöglicht.

Es ist ferner ein Aktor 13 zur Bewegungsanregung des Bedienteils 2 in Auslenkrichtung S und damit zur Erzeugung einer haptischen Rückmeldung in die besagte Auslenkrichtung S vorgesehen. Bevorzugt handelt es sich um einen elektrisch betätigten Aktor 13, wie einen Schwingspulenaktor, welcher ausschließlich am Betätigungsteil befestigt ist.

Zur Detektion einer auf die Eingabefläche 10 wirkenden Betätigungskraft F ist gemäß einer Ausgestaltung ein Kraftsensor 12, beispielsweise ein optischer Kraftsensor, vorgesehen. Beispielsweise wird bei Überschreiten einer vorgegebenen Betätigungskraft F ein haptisches, durch den Aktor 13 erzeugtes Feedback ausgelöst. Hier ist der Kraftsensor 12 zwischen dem Träger und einem Gehäuse, an dem der Träger elastisch nachgebend oder beweglich gelagert ist, angeordnet.

Hier umfassen die Mittel 4 zur rückstellenden Lagerung des Bedienteils zwei, sich im Wesentlichen parallel zueinander und im Wesentlichen parallel zur Eingabefläche 10 erstreckende Federelemente 4a, 4b, die jeweils mindestens einen Blattfederstreifen 5a, 5b aus Federstahl und drei Befestigungselemente 6a, 7a; 6b, 7b aufweisen, in denen der Blattfederstreifen 5a, 5b formschlüssig aufgenommen ist. Hier sind die aus einem Thermoplast ausgebildeten Befestigungselemente 6a, 7a; 6b, 7b durch Umspritzen des Blattfederstreifens 5a, 5b am Blattfederstreifen 5a, 5b in einem thermisch formgebenden Verfahren festgelegt.

Dabei sind die Befestigungselemente 6a, 7a; 6b, 7b eines Federelements 4a, 4b zueinander gleichmäßig beabstandet längs des Blattfederstreifens 5a, 5b verteilt angeordnet, so dass zwischen den Befestigungselementen 6a, 7a; 6b, 7b desselben Federelements 4a, 4b mehrere in einer zur Eingabefläche im Wesentlichen parallelen Ebene schwingfähige Blattfederstreifenabschnitte von im Wesentlichen gleicher Länge verbleiben. Bei der gezeigten Ausführungsform ist der Blattfederstreifen 5a, 5b jeweils hochkant zwischen dem Bedienteil 2 und dem Träger 3 angeordnet, d.h. die Hauptfläche der Blattfederstreifen 5a, 5b ist im Wesentlichen orthogonal zur Eingabefläche 10 angeordnet.

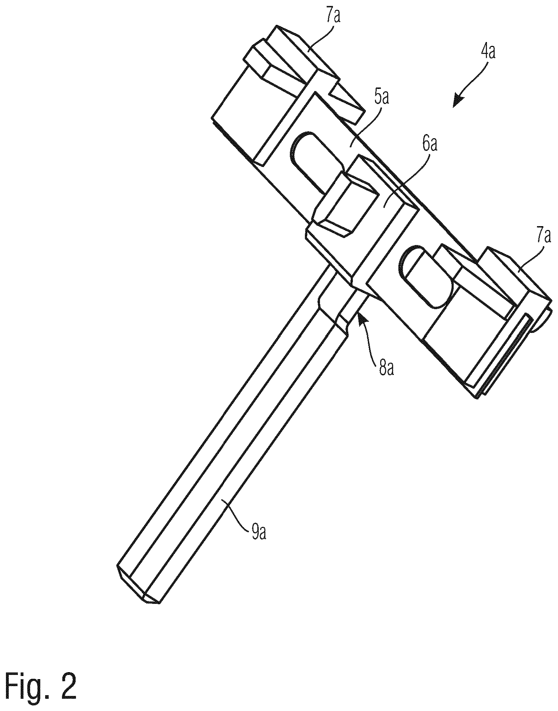

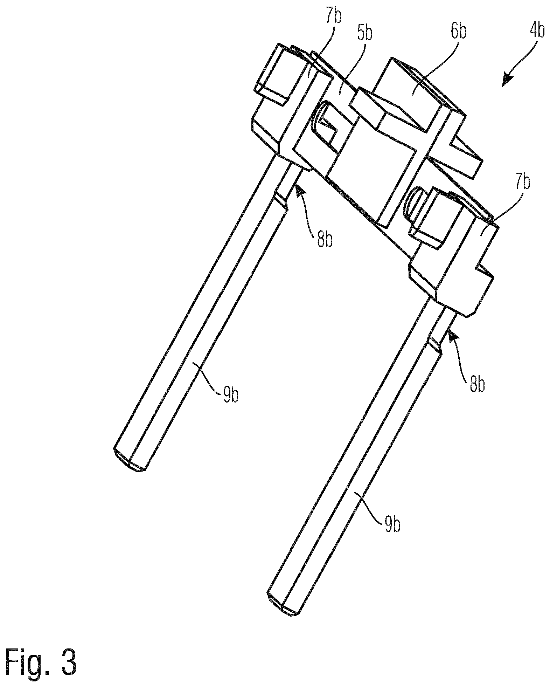

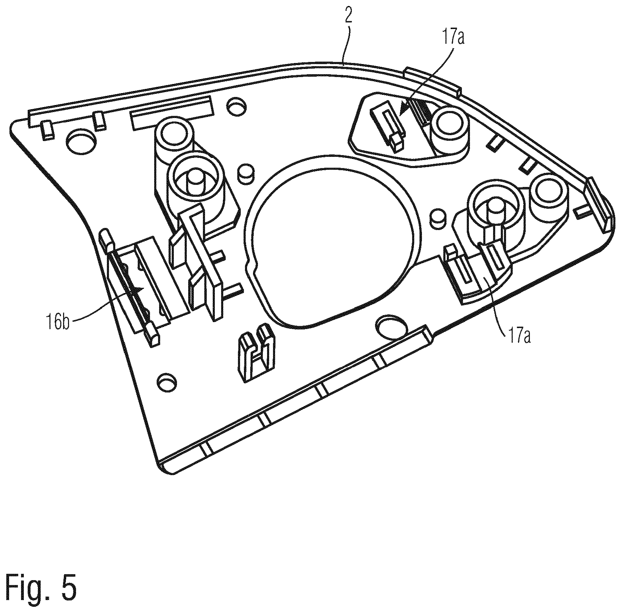

Dabei bilden, wie in den Figuren 2 und 3 dargestellt ist, die äußeren Befestigungselemente 7a eines ersten Federelements 4a, welches in Figur 2 gezeigt ist und ein inneres Befestigungselement 6b eines zweiten Federelements 4b, welches in Figur 3 gezeigt ist, die bedienteilseitigen Befestigungselemente 7a, 6b, womit ausgedrückt sein soll, dass diese jeweils am Bedienteil 2 festgelegt sind. Ferner bilden die äußeren Befestigungselemente 7b des zweiten Federelements 4b und ein inneres Befestigungselement 6a des ersten Federelements 4a die trägerseitigen Befestigungselemente 7b, 6a aus und sind somit jeweils am Träger 3 festgelegt. Die bedienteilseitigen Befestigungselemente 7a, 6b sind jeweils stoffschlüssig, hier durch Ultraschallverschweißen, am Bedienteil 2, genauer im Bereich der Aufnahmen 17a und 16b aus Figur 5 festgelegt. Dazu weist die zugehörige Anlagefläche des Bedienteils 2 jeweils mindestens einen Energierichtungsgeber, wie eine keilförmige Erhebung, auf, um mit dem Bedienteil 2 durch Ultraschallverschweißen stoffschlüssig verbunden zu werden. Zusätzlich können Mittel zur klemmenden Befestigung des bedienteilseitigen Befestigungselements 7a, 6b am Bedienteil 2 vorgesehen sein. Bei der gezeigten Ausführungsform sind die trägerseitigen Befestigungselemente 7b, 6a und die bedienteilseitigen Befestigungselemente 6a, 7b in einer gemeinsamen, zur Eingabefläche 10 im Wesentlichen parallelen Ebene angeordnet.

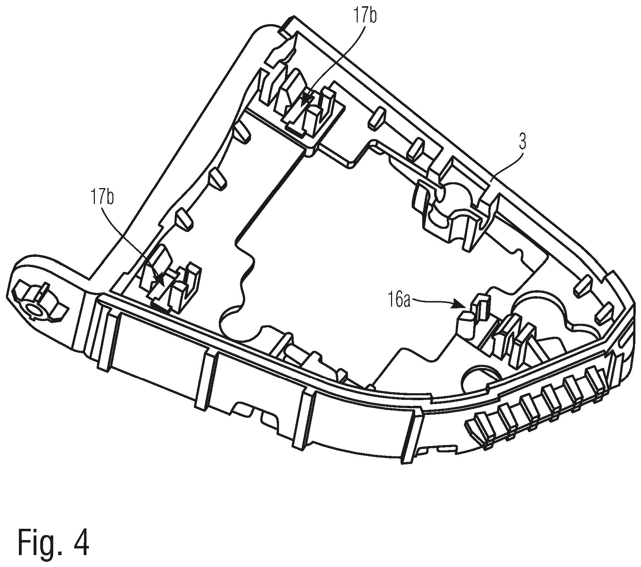

Während die trägerseitigen Befestigungselemente 7b, 6a durch form- und/oder kraftschlüssige Aufnahme am Träger 3 in den zugehörigen Aufnahmen 16a und 17b festgelegt sind, wobei letztere in Figur 4 zu erkennen sind. Die form- oder kraftschlüssige Aufnahme wird durch Verstellen einer Halteeinrichtung 20 erreicht, die hier durch eine in einer konischen Gewindebohrung geführten Schraube realisiert ist, wobei das Eindrehen der Schraube in die Gewindebohrung die Herstellung der form- und/oder kraftschlüssige Verbindung zwischen dem Träger 3 und dem trägerseitigen Befestigungselement 6a bewirkt, wie es in Figur 1 gezeigt ist.

Die Blattfederstreifen 5a, 5b sind beispielsweise jeweils in einem Stanzschritt hergestellt und bevorzugt identisch ausgebildet. Der zwischen dem inneren Befestigungselement 6a, 6b und den äußeren Befestigungselementen 7a, 7b verbleibende und bevorzugt frei zugängliche Blattfederstreifenabschnitt ist elastisch schwingungsfähig und fungiert als "Biegebalken". Ein Durchbruch im Blattfederstreifenabschnitt kann, wie dargestellt, zur Anpassung der elastischen Nachgiebigkeit vorgesehen sein. Ihre Hauptflächen sind im Wesentlichen senkrecht zur Eingabefläche 10 orientiert und sie weisen in der zur Eingabefläche 10 senkrechten, der Auslenkrichtung S entsprechenden Richtung die höchste Nachgiebigkeit auf, während sie im Vergleich dazu eine hohe Steifigkeit bei Druck- und Zugbeanspruchung in Längsrichtung und in der zur Eingabefläche 10 senkrechten Richtung aufweisen.

Das erfindungsgemäß ausgebildete Eingabegerät 1 spart durch die spezifische Ausgestaltung der Lagerungsmittel 4 Bauraum und Gewicht. Zudem ist die Gefahr einer Beschädigung oder Deformation der zugehörigen Federelemente 4a, 4b nahezu ausgeschlossen. Das Rückstellverhalten stellt sich auch ohne Justieraufwand reproduzierbar ein. Die erfindungsgemäß vorgesehene Dreipunktlagerung sowohl durch die trägerseitigen Befestigungselemente 7b, 6a zum Träger 3 hin als auch durch die bedienteilseitigen Befestigungselemente 7a, 6b zum Bedienteil 2 hin wird ein reproduzierbares und wohl definiertes Bewegungs- bzw. Schwingungsverhalten des Bedienteils 2 vorgegeben.

Zur Montageerleichterung sind die trägerseitigen Befestigungselemente 7b, 6a jeweils mit einer Montagehilfe 9a, 9b versehen, wobei die Montagehilfe 9a, 9b jeweils den Träger 3 auf seiner dem Bedienteil 2 abgewandten Seite überragt und jeweils als eine vorstehende Greifhilfe zur händischen oder maschinellen Montage ausgebildet ist. Genauer bildet das betroffene Befestigungselement einen orthogonal sich weg vom Blattfederstreifen 5a, 6b erstreckenden Stab als Montagehilfe aus. Hier ist die Montaghilfe 9a, 9b vorgesehen, das trägerseitige Befestigungselement 7b, 6a mit dem Träger 3 zu verrasten. Hier sind die Montagehilfe 9a, 9b und der verbleibende Rest des trägerseitigen Befestigungselements 7b, 6a einstückig ausgebildet.

Es ist jeweils eine Sollbruchstelle 8a, 8b zur Trennung der Montagehilfe 9a, 9b von einem am Eingabegerät 1 verbleibenden Rest des trägerseitigen Befestigungselements 7b, 6a vorgesehen. Genauer ist die Sollbruchstelle 8a, 8b am Übergang zwischen der stabförmigen Montagehilfe 9a, 9b und dem verbleibenden Rest des trägerseitigen Befestigungselements 7b, 6a vorgesehen und als Schwächung der Materialstärke, insbesondere als Verjüngung ausgebildet. Daher besteht die Möglichkeit, die Montagehilfen 9a, 9b nach dem Befestigen der trägerseitigen Befestigungselemente 7b, 6a an der Sollbruchstelle 8a, 8b von dem am Eingabegerät 1 verbleibenden Rest des trägerseitigen Befestigungselements 7b, 6a abzutrennen.

## Patentansprüche

1. Eingabegerät (1), aufweisend:
ein Bedienteil (2) mit einer Eingabefläche (10);
einen Träger (3);
Mittel (4) zur rückstellenden Lagerung des Bedienteils (2) an dem Träger (3), die ausgebildet sind, das Bedienteil (2) in einer zur Eingabefläche (10) im Wesentlichen parallelen Auslenkrichtung (s) aus einer Ruhestellung auslenkbar und in die Ruhestellung elastisch rückstellend zu lagern; sowie einen Aktor (13) zur Bewegungsanregung des Bedienteils (2) in Auslenkrichtung (S), um eine haptische Rückmeldung für einen Bediener zu erzeugen;
wobei die Mittel (4) zur rückstellenden Lagerung des Bedienteils (2) zwei, sich im Wesentlichen parallel zueinander und im Wesentlichen parallel zur Eingabefläche erstreckende Federelemente (4a, 4b) umfassen, die jeweils einen Blattfederstreifen (5a, 5b) aus Federstahl und mindestens drei, längs des zugehörigen Blattfederstreifens verteilt angeordnete Befestigungselemente (6a, 7a; 6b, 7b) aufweisen, in denen der Blattfederstreifen (5a, 5b) formschlüssig aufgenommen ist, so dass zwischen den äußeren Befestigungselementen (7a; 7b) und den nächstbenachbarten, inneren Befestigungselementen (6a, 6b) desselben Federelements (5a, 5b) jeweils in einer zur Eingabefläche (10) im Wesentlichen parallelen Ebene schwingfähige Blattfederstreifenabschnitte von im Wesentlichen gleicher Länge verbleiben; **dadurch gekennzeichnet, dass** die äußeren Befestigungselemente (7a) eines ersten Federelements (5a) der zwei Federelemente (5a, 5b) und ein inneres Befestigungselement (6b) eines verbleibenden zweiten Federelements (5b) der zwei Federelemente (5a, 5b) die bedienteilseitigen Befestigungselemente (7a, 6b) bilden und jeweils am Bedienteil (2) festgelegt sind und die äußeren Befestigungselemente (7b) des zweiten Federelements (5a) und ein inneres Befestigungselement (6a) des ersten Federelements (5a) die trägerseitigen Befestigungselemente (6a, 7b) bilden und jeweils am Träger (3) festgelegt sind.

2. Eingabegerät (1) gemäß Anspruch 1, wobei die bedienteilseitigen Befestigungselemente (7a, 6b) mit dem Bedienteil 82) stoffschlüssig verbunden, bevorzugt verschweißt sind.

3. Eingabegerät (1) gemäß einem der vorhergehenden Ansprüche, wobei die trägerseitigen Befestigungselemente (6a, 7b) ausgebildet sind, mit dem Träger (3) eine Rastverbindung herzustellen.

4. Eingabegerät (1) gemäß einem der vorhergehenden Ansprüche, wobei die trägerseitigen Befestigungselemente (6a, 7b) jeweils eine Montagehilfe (9a, 9b) aufweisen, wobei die Montagehilfe (9a, 9b) bevorzugt jeweils den Träger (3) auf seiner dem Bedienteil (2) abgewandten Seite überragt.

5. Eingabegerät (1) gemäß dem vorhergehenden Anspruch, wobei jeweils eine Sollbruchstelle (8a, 8b) zur Trennung der Montagehilfe (9a, 9b) von einem am Eingabegerät (1) verbleibenden Rest des trägerseitigen Befestigungselements (6a, 7b) vorgesehen ist.

6. Eingabegerät (1) gemäß einem der vorhergehenden Ansprüche wobei die trägerseitigen Befestigungselemente (6a, 7b) in einer ersten Ebene angeordnet sind und die bedienteilseitigen Befestigungselemente (6b, 7a) in einer zweiten, zur ersten Ebene parallelen Ebene oder die trägerseitigen Befestigungselemente (6a, 7b) und die bedienteilseitigen Befestigungselemente (6b, 7a) in einer gemeinsamen Ebene angeordnet sind.

7. Eingabegerät (1) gemäß einem der vorhergehenden Ansprüche, wobei die Befestigungselemente (6a, 7a; 6b, 7b) jeweils durch Umspritzen des Blattfederstreifens (5a, 5b) am Blattfederstreifen (5a, 5b) festgelegt werden.

8. Eingabegerät (1) gemäß einem der vorhergehenden Ansprüche, wobei alle Befestigungselemente (6a, 7a; 6b, 7b) aus einem Thermoplast ausgebildet sind, dabei bevorzugt mindestens eines der Befestigungselemente (6a, 7a; 6b, 7b) zumindest teilweise aus einem thermoplastischen Elastomer ausgebildet ist.

9. Verfahren zur Herstellung eines Eingabegeräts (1), aufweisend die folgenden Schritte:
Bereitstellen eines Bedienteils (2) mit einer Eingabefläche (10);
Bereitstellen eines Trägers (3);
Bereitstellen von Mitteln (4) zur rückstellenden Lagerung des Bedienteils (2) an dem Träger (3), die ausgebildet sind, das Bedienteil (2) in einer zur Eingabefläche (10) im Wesentlichen parallelen Auslenkrichtung (s), aus einer Ruhestellung auslenkbar und elastisch rückstellend zu lagern; wobei die Mittel (4) zur rückstellenden Lagerung des Bedienteils (2) zwei Federelemente (4a, 4b) umfassen, die jeweils einen Blattfederstreifen (5a, 5b) aus Federstahl und mindestens drei, längs des zugehörigen Blattfederstreifens (5a, 5b) verteilt angeordnete Befestigungselemente (6a, 7a; 6b, 7b) aufweisen, in denen der Blattfederstreifen (5a, 5b) formschlüssig aufgenommen ist,
so dass zwischen den äußeren Befestigungselementen (7a, 7b) und den nächstbenachbarten inneren Befestigungselementen (6a, 6b) desselben Federelements (4a, 4b) in einer gemeinsamen, zur Eingabefläche (10) im Wesentlichen parallelen Ebene schwingfähige Blattfederstreifenabschnitte von im Wesentlichen gleicher Länge verbleiben und die Federelemente (4a, 4b) sich im Wesentlichen parallel zueinander und im Wesentlichen parallel zur Eingabefläche (10) erstrecken;
Befestigen eines Aktors (13) zur Bewegungsanregung des Bedienteils (2) in Auslenkrichtung (S) an dem Bedienteil (2), um eine haptische Rückmeldung für einen Bediener zu erzeugen;
**gekennzeichnet durch**
Befestigen der äußeren Befestigungselemente (7a) eines ersten Federelements (4a) der zwei Federelemente (4a, 4b) und eines inneren Befestigungselements (6b) eines verbleibenden zweiten Federelements (4b) der zwei Federelemente (4a, 4b) jeweils am Bedienteil (2), wobei diese die bedienteilseitigen Befestigungselemente (7a, 6b) bilden; und durch Befestigen der äußeren Befestigungselemente (7b) des zweiten Federelements (5b) und eines inneren Befestigungselements (6a) des ersten Federelements (4a) jeweils am Träger (3), wobei diese die trägerseitigen Befestigungselemente (7a, 6b) bilden.

10. Verfahren gemäß dem vorhergehenden Anspruch, wobei die bedienteilseitigen Befestigungselemente (7a, 6b) durch Ultraschallverschweißen am Bedienteil (2) festgelegt werden.

11. Verfahren gemäß einem der vorhergehenden Ansprüche 15 oder 16, wobei die trägerseitigen Befestigungselemente (7b, 6a) durch Verrasten am Träger (3) festgelegt werden.

12. Verfahren gemäß einem der vorhergehenden Ansprüche 15 bis 17, wobei die trägerseitigen Befestigungselemente (7b, 6a) jeweils eine Montagehilfe (9a, 9b) aufweisen und das Befestigen der trägerseitigen Befestigungselemente (7a, 6b) mittels oder unter Verwendung der jeweils vorgesehenen Montagehilfe (9a, 9b) erfolgt, wobei die Montagehilfe (9a, 9b) bevorzugt jeweils den Träger (3) auf seiner dem Bedienteil (2) abgewandten Seite überragt.

13. Verfahren gemäß dem vorhergehenden Anspruch, wobei die Montagehilfen (9a, 9b) nach dem Befestigen der trägerseitigen Befestigungselemente (7a, 6b) an einer Sollbruchstelle (8a, 8b) von dem am Eingabegerät (1) verbleibenden Rest des trägerseitigen Befestigungselements (7a, 6b) abgetrennt werden.

14. Verfahren gemäß einem der vorhergehenden Ansprüche 15 bis 19, wobei alle Befestigungselemente (6a, 7a; 6b, 7b) aus einem Thermoplast ausgebildet werden, dabei bevorzugt mindestens eines der Befestigungselemente (6a, 7a; 6b, 7b) zumindest teilweise aus einem thermoplastischen Elastomer ausgebildet wird.

## Claims

1. Input device (1), comprising:
an operating element (2) with an input surface (10);
a carrier (3);
means (4) for mounting the operating element (2) in a restoring manner on the carrier (3), which are designed to mount the operating element (2) such that it can be deflected from a rest position in a direction of deflection (s) substantially parallel to the input surface (10) and elastically restoring it into the rest position; and
an actuator (13) for excitation of movement of the operating element (2) in the direction of deflection (S) in order to generate haptic feedback for an operator;
wherein the means (4) for mounting the operating element (2) in a restoring manner comprise two spring elements (4a, 4b) extending substantially parallel to each other and substantially parallel to the input surface, each comprising a leaf spring strip (5a, 5b) made from spring steel and at least three fastening elements (6a, 7a; 6b, 7b) which are arranged along the associated leaf spring strip and in which the leaf spring strip (5a, 5b) is received in a positively locking manner, with the result that swinging leaf spring strip portions of substantially the same length each remain between the outer fastening elements (7a; 7b) and the nearest, inner fastening elements (6a, 6b) of the same spring element (5a, 5b) in a plane substantially parallel to the input surface (10); **characterized in that** the outer fastening elements (7a) of a first spring element (5a) of the two spring elements (5a, 5b) and an inner fastening element (6b) of a remaining second spring element (5b) of the two spring elements (5a, 5b) form the operating element-side fastening elements (7a, 6b) and are each fixed on the operating element (2), and the outer fastening elements (7b) of the second spring element (5a) and an inner fastening element (6a) of the first spring element (5a) form the carrier-side fastening elements (6a, 7b) and are each fixed on the carrier (3).

2. Input device (1) according to Claim 1, wherein the operating element-side fastening elements (7a, 6b) are connected in an integrally joined manner, preferably welded, to the operating element (2).

3. Input device (1) according to either of the preceding claims, wherein the carrier-side fastening elements (6a, 7b) are configured to establish a latching connection to the carrier (3).

4. Input device (1) according to one of the preceding claims, wherein the carrier-side fastening elements (6a, 7b) each have a mounting aid (9a, 9b), wherein the mounting aid (9a, 9b) preferably in each case protrudes beyond the carrier (3) on its side facing away from the operating element (2).

5. Input device (1) according to the preceding claim, wherein a predetermined break point (8a, 8b) is provided in each case for separating the mounting aid (9a, 9b) from a remainder of the carrier-side fastening element (6a, 7b) remaining on the input device (1).

6. Input device (1) according to one of the preceding claims, wherein the carrier-side fastening elements (6a, 7b) are arranged in a first plane, and the operating element-side fastening elements (6b, 7a) are arranged in a second plane parallel to the first plane, or the carrier-side fastening elements (6a, 7b) and the operating element-side fastening elements (6b, 7a) are arranged in a common plane.

7. Input device (1) according to one of the preceding claims, wherein the fastening elements (6a, 7a; 6b, 7b) are fixed in each case on the leaf spring strip (5a, 5b) by overmoulding the leaf spring strip (5a, 5b).

8. Input device (1) according to one of the preceding claims, wherein all fastening elements (6a, 7a; 6b, 7b) are formed from a thermoplastic, and preferably at least one of the fastening elements (6a, 7a; 6b, 7b) is at least partially formed from a thermoplastic elastomer here.

9. Method for producing an input device (1), comprising the following steps:
providing an operating element (2) with an input surface (10);
providing a carrier (3);
providing means (4) for the mounting the operating element (2) in a restoring manner on the carrier (3), which are designed to mount the operating element (2) such that it can be deflected in a direction of deflection (s) substantially parallel to the input surface (10) from a rest position and resets elastically; wherein the means (4) for mounting the operating element (2) in a restoring manner comprise two spring elements (4a, 4b), each having a leaf spring strip (5a, 5b) made from spring steel and at least three fastening elements (6a, 7a; 6b, 7b) arranged distributed along the associated leaf spring strip (5a, 5b), in which the leaf spring strip (5a, 5b) is received in a positively locking manner, with the result that swinging leaf spring strip sections of substantially the same length remain between the outer fastening elements (7a, 7b) and the nearest inner fastening elements (6a, 6b) of the same spring element (4a, 4b) in a common plane substantially parallel to the input surface (10), and the spring elements (4a, 4b) extend substantially parallel to each other and substantially parallel to the input surface (10);
fastening an actuator (13) to the operating element (2) to excite movement of the operating element (2) in the direction of deflection (S) in order to generate haptic feedback for an operator;
**characterized by**
fastening the outer fastening elements (7a) of a first spring element (4a) of the two spring elements (4a, 4b) and an inner fastening element (6b) of a remaining second spring element (4b) of the two spring elements (4a, 4b) in each case to the operating element (2), these forming the fastening elements (7a, 6b) on the operating element side; and by
fastening the outer fastening elements (7b) of the second spring element (5b) and an inner fastening element (6a) of the first spring element (4a) in each case to the carrier (3), these forming the carrier-side fastening elements (7a, 6b).

10. Method according to the preceding claim, wherein the mounting elements (7a, 6b) on the operating element side are fixed by ultrasonic welding on the operating element (2).

11. Method according to either of the preceding Claims 15 or 16, wherein the carrier-side fastening elements (7b, 6a) are fixed by latching on the carrier (3).

12. Method according to one of the preceding Claims 15 to 17, wherein the carrier-side fastening elements (7b, 6a) each have an assembly aid (9a, 9b), and the fastening of the carrier-side fastening elements (7a, 6b) takes place by means of or using the respective provided mounting aid (9a, 9b), wherein the assembly aid (9a, 9b) preferably in each case protrudes beyond the carrier (3) on its side facing away from the operating element (2).

13. Method according to the preceding claim, wherein the mounting aids (9a, 9b), after fastening the carrier-side fastening elements (7a, 6b), are separated at a predetermined break point (8a, 8b) from the rest of the carrier-side fastening element (7a, 6b) remaining on the input device (1).

14. Method according to one of the preceding Claims 15 to 19, wherein all fastening elements (6a, 7a; 6b, 7b) are formed from a thermoplastic, and preferably at least one of the fastening elements (6a, 7a; 6b, 7b) is formed at least partially from a thermoplastic elastomer here.

## Revendications

1. Dispositif de saisie (1), comprenant :
une partie de commande (2) ayant une surface de saisie (10) ;
un support (3) ;
des moyens (4) pour le montage avec rappel de la partie de commande (2) sur le support (3), qui sont conçus de façon à permettre à la partie de commande (2) de s'écarter d'une position de repos dans une direction d'écartement (s) sensiblement parallèle à la surface d'entrée (10) et de revenir élastiquement dans la position de repos ; ainsi qu'
un actionneur (13) pour exciter le mouvement de la partie de commande (2) dans le sens de déviation (S) afin de générer un retour haptique pour un opérateur ;
les moyens (4) pour le montage avec rappel de la partie de commande (2) comprenant deux éléments à ressort (4a, 4b) s'étendant sensiblement parallèlement l'un à l'autre et sensiblement parallèlement à la surface de saisie, qui comportent chacun une lame de ressort (5a, 5b) en acier à ressort et au moins trois éléments de fixation (6a, 7a ; 6b, 7b) répartis le long de la lame de ressort correspondante, dans lesquels la lame de ressort (5a, 5b) est logée par complémentarité de formes, de sorte qu'entre les éléments de fixation extérieurs (7a ; 7b) et les éléments de fixation intérieurs (6a, 6b) immédiatement voisins du même élément à ressort (5a, 5b), il reste des portions de bande de ressort à lame oscillantes de longueur sensiblement égale dans un plan sensiblement parallèle à la surface d'entrée (10) ;
**caractérisé en ce que** les éléments de fixation extérieurs (7a) d'un premier élément à ressort (5a) des deux éléments ressorts (5a, 5b) et un élément de fixation intérieur (6b) d'un deuxième élément à ressort restant (5b) parmi les deux éléments à ressort (5a, 5b) forment les éléments de fixation côté éléments de fixation (7a, 6b) et sont chacun fixés à la partie de commande (2), et les éléments de fixation extérieurs (7b) du deuxième élément à ressort (5a) et un élément de fixation intérieur (6a) du premier élément à ressort (5a) forment les éléments de fixation (6a, 7b) côté support et sont chacun fixés au support (3).

2. Dispositif de saisie (1) selon la revendication 1, dans lequel les éléments de fixation (7a, 6b) côté partie de commande sont reliés par liaison de matière à la partie de commande (82), de préférence sont soudés.

3. Dispositif de saisie (1) selon l'une des revendications précédentes, dans lequel les éléments de fixation (6a, 7b) côté support sont conçus pour réaliser une liaison par encliquetage avec le support (3).

4. Dispositif de saisie (1) selon l'une des revendications précédentes, dans lequel les éléments de fixation (6a, 7b) côté support présentent chacun un dispositif d'aide au montage (9a, 9b), le dispositif d'aide au montage (9a, 9b) dépassant de préférence du support (3) sur son côté opposé à la partie de commande (2).

5. Dispositif de saisie (1) selon la revendication précédente, dans lequel un point de rupture (8a, 8b) est prévu pour séparer le dispositif d'aide au montage (9a, 9b) d'un reste de l'élément de fixation (6a, 7b) côté support restant sur le dispositif de saisie (1).

6. Dispositif de saisie (1) selon l'une des revendications précédentes, dans lequel les éléments de fixation (6a, 7b) côté support sont agencés dans un premier plan et les éléments de fixation (6b, 7a) côté partie de commande sont agencés dans un deuxième plan parallèle au premier plan ou les éléments de fixation (6a, 7b) côté support et les éléments de fixation (6b, 7a) côté partie de commande sont agencés dans un plan commun.

7. Dispositif de saisie (1) selon l'une des revendications précédentes, dans lequel les éléments de fixation (6a, 7a ; 6b, 7b) sont fixés à la bande de ressort à lame (5a, 5b) par surmoulage de la bande de ressort à lame (5a, 5b).

8. Dispositif de saisie (1) selon l'une des revendications précédentes, dans lequel tous les éléments de fixation (6a, 7a ; 6b, 7b) sont réalisés en une matière thermoplastique, de préférence au moins l'un des éléments de fixation (6a, 7a ; 6b, 7b) est réalisé au moins partiellement en un élastomère thermoplastique.

9. Procédé de fabrication d'un dispositif de saisie (1), comprenant les étapes suivantes :
mettre à disposition une partie de commande (2) ayant une surface de saisie (10) ;
mettre à disposition un support (3) ;
mettre à disposition des moyens (4) pour le montage avec rappel de la partie de commande (2) sur le support (3), qui sont conçus pour permettre de faire pivoter la partie de commande (2) dans une direction de pivotement (s) sensiblement parallèle à la surface d'entrée (10) à partir d'une position de repos et pour la monter avec rappel élastique ; les moyens (4) pour le montage avec rappel de la partie de commande (2) comprennent deux éléments à ressort (4a, 4b), qui présentent chacun une bande de ressort à lame (5a, 5b) en acier à ressort et au moins trois éléments de fixation (6a, 7a ; 6b, 7b), dans lesquels la bande de ressort à lame (5a, 5b) est logée par complémentarité de formes, de sorte qu'entre les éléments de fixation extérieurs (7a, 7b) et les éléments de fixation intérieurs (6a, 6b) immédiatement voisins du même élément à ressort (4a, 4b), il reste, dans un plan commun sensiblement parallèle à la surface d'entrée (10), des portions de ressort à lame de longueur sensiblement égale et aptes à osciller, et les éléments de ressort (4a, 4b) s'étendent sensiblement parallèlement l'un à l'autre et sensiblement parallèlement à la surface d'entrée (10) ;
fixer un actionneur (13) sur la partie de commande (2) dans le sens de la déviation (S) pour exciter le mouvement de la partie de commande (2) afin de générer un retour haptique pour un opérateur ;
**caractérisé par**
le fait de fixer les éléments de fixation extérieurs (7a) d'un premier élément à ressort (4a) parmi les deux éléments à ressort (4a, 4b) et d'un élément de fixation intérieur (6b) d'un deuxième élément à ressort (4b) restant parmi les deux éléments à ressort (4a, 4b) respectivement sur la partie de commande (2), ces éléments formant les éléments de fixation (7a, 6b) côté partie de commande ; et par
le fait de fixer les éléments de fixation extérieurs (7b) du deuxième élément à ressort (5b) et d'un élément de fixation intérieur (6a) du premier élément à ressort (4a) respectivement sur le support (3), ces éléments formant les éléments de fixation (7a, 6b) côté support.

10. Procédé selon la revendication précédente, dans lequel les éléments de fixation (7a, 6b) côté partie de commande sont fixés à la partie de commande (2) par soudage par ultrasons.

11. Procédé selon l'une des revendications 15 ou 16 précédentes, dans lequel les éléments de fixation (7b, 6a) côté support sont fixés par encliquetage sur le support (3).

12. Procédé selon l'une des revendications 15 à 17 précédentes, dans lequel les éléments de fixation (7b, 6a) côté support présentent chacun un dispositif d'aide au montage (9a, 9b) et la fixation des éléments de fixation côté support (7a, 6b) s'effectue au moyen du ou en utilisant le dispositif d'aide au montage (9a, 9b) prévu à cet effet, le dispositif d'aide au montage (9a, 9b) dépassant de préférence du support (3) sur son côté opposé à la partie de commande (2).

13. Procédé selon la revendication précédente, dans lequel les dispositifs d'aide au montage (9a, 9b) sont, après la fixation des éléments de fixation (7a, 6b) côté support, séparés du reste de l'élément de fixation (7a, 6b) côté support restant sur le dispositif d'entrée (1), en un point de rupture prédéterminé (8a, 8b).

14. Procédé selon l'une des revendications 15 à 19 précédentes, dans lequel tous les éléments de fixation (6a, 7a ; 6b, 7b) sont réalisés en une matière thermoplastique, au moins un des éléments de fixation (6a, 7a ; 6b, 7b) étant de préférence réalisé au moins en partie en un élastomère thermoplastique.
